(19) Europäisches Patentamt
European Patent Office
Office européen des brevets

(11) Veröffentlichungsnummer: **0 229 611 B1**

# EUROPÄISCHE PATENTSCHRIFT
(12)

(45) Veröffentlichungstag der Patentschrift:
03.04.91 Patentblatt 91/14

(51) Int. Cl.⁵: **B60N 3/00**

(21) Anmeldenummer: 87100031.1

(22) Anmeldetag: 03.01.87

(54) **Fahrgastsitz.**

(30) Priorität: 11.01.86 DE 8600508 U

(43) Veröffentlichungstag der Anmeldung:
22.07.87 Patentblatt 87/30

(45) Bekanntmachung des Hinweises auf die
Patenterteilung:
03.04.91 Patentblatt 91/14

(84) Benannte Vertragsstaaten:
AT BE CH DE ES FR GB IT LI NL SE

(56) Entgegenhaltungen:
AU-B- 44 372
US-A- 2 619 395
US-A- 3 371 956
US-A- 3 773 381

(73) Patentinhaber: Ignaz Vogel GmbH & Co KG,
Fahrzeugsitze
Kleinsteinbacher Strasse 42-44
W-7500 Karlsruhe 41-Stu (DE)

(72) Erfinder: Vogel, Ignaz, Dipl.-Ing.
Kleinsteinbacher Strasse 44
W-7500 Karlsruhe 41-Stu (DE)

(74) Vertreter: Trappenberg, Hans
Postfach 1909
W-7500 Karlsruhe 1 (DE)

## Beschreibung

Die Erfindung betrifft einen Fahrgastsitz für Personenbeförderungsfahrzeuge, insbesondere für Reise-Omnibusse, mit einem auf einem Sitzuntergestell angeordneten Sitzteil und einem verschwenkabren Rückenteil, wobei das Rückenteil rückseitig durch eine Kunststoffschale abgedeckt ist und rückseitig am Sitz ein herausklappparer Tisch vorgesehen ist, dessen Tischplatte die gesamte Breite des Rückenteils überspannt, wobei der Tisch über ein Klappscharnier an einem am Sitzuntergestell gelagerten Schwenkarm angelenkt ist.

Ein solcher Sitz ist der US-A 3,773,381 zu entrehmen.

Derartige Fahrgastsitze dienen nicht nur der Bequemlichkeit der Reisenden, sondern sie haben auch eine Sicherheitsaufgabe zu erfüllen. Neben der Verkehrsund Betriebssicherheit der Fahrgastsitze müssen sie, insbesondere im Falle eines Unfalls, also insbesondere eines Aufpralls des Omnibusses in Fahrtrichtung, die Passagiere, die in Fahrtrichtung nach vorne geschleudert werden, unter Aufnahme der Aufprallenergie möglichst großflächig, ohne daß irgendwelche Konstruktionsteile hervortreten, abfangen. Insbesondere die letzte Bedingun, daß nämlich bei der Deformierung der Sitze zur Aufnahme der Aufprallenergie, keine Konstruktionsteile hervortreten dürfen, ist bei den meisten auf dem Markt befindlichen Fahrgastsitzen nicht erfüllt. Vielmehr bestehen die Rückenteile dieser Fahrgastsitze im allgemeinen aus einem Rohrrahmen, der lediglich rückseitig durch eine Kunststoffplatte abgedeckt ist. Nach Zerbersten der Kunststoffplatte durch Aufprallen eines Passagiers als Folge eines Unfalls, wird die verbleibende Energie nur noch von diesem Rohrrahmen aufgenommen, wobei hohe spezifische Drücke, die zu lebenssefährlichen Quetschungen und Verletzungen führen können, auftreten können.

Eine Bedingung, die an derartige Fahrgastsitze zu stellen ist, ist also, nicht nur daß sie die Aufprallenergie im Falle eines Unfalles nach vorne geschleuderter Passagiere aufnehmen beziehungsweise allmählich abbauen, sondern auch, daß die Passagiere großflächig abgefangen werden bei entsprechend niedrigen spezifischen Drücken.

Bei derartigen Reisebussen sind an der Rückseite der Rückenlehne auch Klapptische vorgesehen. Da das Rückenteil verschwenkbar ist, eine horizontale Lage der Tische, sind sie am Rückenteil angebracht, also nicht gewährleistet werden kann, sind sie in aller Regel an separaten Streben, die am Untergestell angelenkt sind, angebracht. Diese üblicherweise beidseits an der Tischplatte angelenkten Streben gefährden im Falle eines Unfalls ganz besonders die unteren Extremitäten der Passagiere, da sie genau in Fortsetzung der Oberschenkel angeordnet sind, nach vorne geschleuderte Passagiere also mit den unteren Extremitäten, insbesondere mit den Knien, auf diese Streben aufschlagen. Die hohen, hierbei entstehenden spezifischen Drücke, führen nicht nur zu Schnitt-, Riß- oder Quetschverletzunsen, sondern zu teilweise irreparablen Knochen- und Gelenkverletzungen.

Dem kann dadurch vorgebeugt werden, daß nur eine einzige Mittelstrebe vorgesehen ist, wie dies beispielsweise die US-A-2,619,395 zeigt.

Dadurch, daß nur eine einzige in der Mitte des Rückenteils verlaufende Strebe angeordnet ist, liegen die unteren Extremitäten der Passagiere beidseits dieser Strebe, treffen also im Falle eines Unfalls nicht auf die Strebe, sondern auf die nachgiebigen Teile des Rückenteils. Außerdem wird dadurch, daß die Tischplatte die gesamte Breite des Rückenteils überspannt, wie beispielsweise aus der US-A-3,773,381 zu ersehen, eine großflächige Auflage für den Oberkörper des Passagiers geschaffen, so daß auch dort der spezifische Druck sehr gering ist.

Wie die Unfallstatistik zeigt, ist der Frontalaufprall, bei dem also die Passagiere senkrecht auf die Rückenfläche des vor ihnen befindlichen Sitzes aufprallen, selten. Nahezu die Regel ist ein seitlich versetzter Aufprall, so daß auch die Passagiere in einem mehr oder weniger spitzen Winkel auf diese rückseitige Fläche aufschlagen. Die Erfindung hat sich die Aufgabe gestellt, auch bei diesem seitlichen Aufschlagen die Passagiere vor Verletzungen zu schützen. Dies wird in erfindungsgemäßer Weise dadurch erreicht, daß die Kunststoffschale den Konturen des Schwenkarms und der Tischplatte entsprechend vertieft ist, so daß diese so gebildete Rückseite vollkommen glatt ist, daß im Rückenteil eine in Höhe der angeklappten Tischplatte verlaufende Querstrebe angebracht ist, daß das Klappscharnier über drehmomentabhängige Halterungen an der Tischplatte und-/oder an dem Schwenkarm angebracht ist und daß am Klappscharnier drehmomentabhängige mit der Tischplatte verbundene Anschläge zum Verstellen der Gebrauchslage des Tisches angeordnet sind. Durch die drehmomentabhängige Anlenkung wird bei einer übermäßigen Belastung der Tischplatte, entweder durch sich abstützende Passagiere oder auch im Falle eines Unfalls, die Halterung der Tischplatte nachgeben, so daß sie verschwenken kann und sich dabei wieder die großflächige Abdeckung des Rückenteils ergibt.

Eine weitere Sicherheit ist dann gegeben, wenn einem weiteren Erfindungsmerkmal nach das Klappscharnier über drehmomentabhängige Halterungen an der Tischplatte und/oder an dem Schwenenkarm angebracht ist oder, daß am Klappscharnier drehmomentabhängige, mit der Tischplatte verbundene Anschläge, zum Feststellen der Gebrauchslage des Tisches angeordnet sind. In beiden Fällen wird bei einer übermäßigen Belastung der Tischplatte, entweder durch sich abstützende Passagiere, oder auch im Falle eines Unfalls, die Halterung der Tischplatte nachgeben, so daß sie verschwenken kann und sich dabei wieder die großflächige Abdeckung des Rückenteils ergibt.

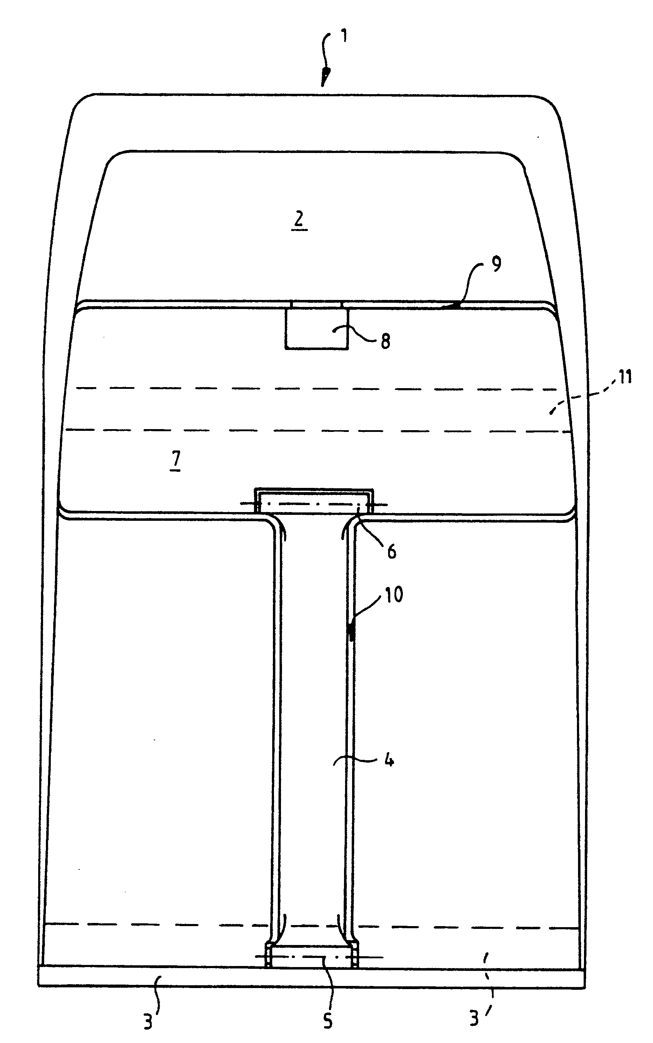

Auf der Zeichnung ist ein Ausführungsbeispiel des Erfindungsgegenstrandes schematisch dargestellt.

An der Rückseite eines Rückenteils 1 eines Fahrgastsitzes, das durch eine Kunststoffschale 2 abgedeckt ist, ist, und zwar an einem Sitzuntergestell 3, ein Schwenkarm 4 angelenkt (5). Jenseits ist über ein Klappscharnier 6 eine Tischplatte 7 angeordnet, wobei diese Tischplatte 7 über die gesamte Breite des Rückenteils 1 reicht. Oberseitig an der Tischplatte ist ein Riegel 8 zum Verriegeln der Tischplatte 7 in der gezeichneten Ruhelage angebracht. Die Kunststoffschale 2 weist Vertiefungen 9, 10 zur Aufnahme der Tischplatte 7 beziehungsweise des Schwenkarms 4 auf. Der Schwenkarm 4 ist außerdem an den Kanten leicht verrundet, weist also keine scharfen Kanten auf.

Im Falle eines Unfalls wird der Passaaier auf die gezeigte Rückseite des Rückenteils 1 eines Fahrgastsitzes geschleudert, trifft dort auf die großflächige Tischplatte 7, so daß die Aufprallenergie über eine große Fläche und damit mit geringem spezifischen Druck auf das Rückenreil 1 des Fahrgastsitzes übertragen wird. Eine Deformierung des Fahrgastsitzes wird hierbei auch durch eine Querstrebe 11, die hinter der Tischplatte 7 im Rückenteil 1 angeordnet ist, vermieden. Dadurch, daß nur ein einziger mittig angeordneter Schwenkarm 4 vorgesehen ist, treffen die unteren Extremitäten des Passagiers im Falle eines Unfalls nicht auf diese Strebe, sondern beidseits auf verhältnismäßig weiche Teile des Rückenteils 1, so daß eine Verletzungsgefahr weitgehend vermieden ist.


**Ansprüche**

1. Fahrgastsitz für Personenbeförderungsfahrzeuge, insbesondere Reise-Omnibusse, mit einem auf einem Sitzuntergestell (3) angeordneten Sitzteil und einem verschwenkbaren Rückenteil (1), wobei das Rückenteil rückseitig durch eine Kunststoffschale (2) abgedeckt ist und rückseitig am Sitz ein herausklappbarer Tisch vorgesehen ist, dessen Tischplatte (7) die gesamte Breite des Rückenteils (1) überspannt, wobei der Tisch über ein Klappscharnier (6) an einem am Sitzuntergestell (3) gelagerten Schwenkarm (4) angelenkt ist, dadurch gekennzeichnet, das der Schwenkarm (4) in der Mitte des Rückenteils (1) verläuft, daß die Kunststoffschale (2) den Konturen des Schwenkarms (4) und der Tischplatte (7) entsprechend vertieft ist,

daß im Rückenteil (1) eine in Höhe der angeklappten Tischplatte (7) verlaufende Querstrebe (11) angebracht ist,

daß das Klappscharnier (6) über drehmomentabhängige Halterungen an der Tischplatte (7) und-/oder am Schwenkarm (4) angebracht ist und daß am Klappscharnier (6) drehmomentabhängige, mit der Tischplatte (7) verbundene Anschläge zum Feststellen der Gebrauchslage des Tischs (Tischplatte 7) angeordnet sind.


**Claims**

1. A passenger seat for vehicles for conveying passengers, in particular tour buses, comprising a seat portion arranged on a seat support structure (3) and a pivotable back portion (1), wherein the back portion is covered at its rear side by a plastics shell (2) and provided on the seat at the back is a table which can be folded out and the table plate (7) of which extends over the entire width of the back portion (1), wherein the table is pivotally mounted by way of a pivot hinge (6) to a pivot arm (4) mounted on the seat support structure (3), characterised in that

the pivot arm (4) extends in the middle of the back portion (1),

the plastics shell (2) is recessed to correspond to the contours of the pivot arm (4) and the table plate (7),

disposed in the back portion (1) is a transverse strut (11) which extends at the height of the table plate (7) in the folded position,

the pivot hinge (6) is mounted to the table plate (7) and/or the pivot arm (4) by torque-dependent mountings, and

arranged on the pivot hinge (6) are torque-dependent abutments which are connected to the table plate (7) for fixing the position of use of the table (table plate 7).


**Revendications**

1. Siège de passager pour véhicules de transport de personnes, en particulier des cars de tourisme, comprenant une partie d'assise disposée sur un châssis de base (3) et un dossier pivotant (1), la face postérieure du dossier étant recouverte par une coquille en matière plastique (2) et le siège comportant, postérieurement, une tablette rabattable dont le plateau (7) couvre toute la largeur du dossier (1), la tablette étant articulée, par l'intermédiaire d'une charnière de rabat (6), sur un bras pivotant (4) monté sur le châssis de base (3), caractérisé par le fait

que le bras pivotant (4) s'étend au milieu du dossier (1) ;

que la coquille en matière plastique (2) est encaissée en concordance avec les configurations du bras pivotant (4) et du plateau (7) de la tablette ;

qu'une membrure transversale (11), ménagée dans le dossier (1), s'étend à la hauteur du plateau (7) de la tablette relevé ;

que la charnière de rabat (6) est implantée, sur le plateau (7) de la tablette et/ou sur le bras pivotant (4), par l'intermédiaire de pièces de retenue agissant en fonction du couple de rotation ; et

que des butées, reliées au plateau (7) de la tablette et agissant en fonction du couple de rotation, sont disposées sur la charnière de rabat (6) afin d'arrêter la position d'utilisation de la tablette (plateau 7).